# EUROPÄISCHE PATENTSCHRIFT

(11) **EP 0 953 526 B1**
(45) Veröffentlichungstag und Bekanntmachung des Hinweises auf die Patenterteilung: **12.12.2001**
(21) Anmeldenummer: 99102566.9
(22) Anmeldetag: 11.02.1999
(51) Int. Cl.: B65G 53/60

(54) **Vorrichtung zum Fördern von Schüttgütern**
Device for conveying bulk products
Dispositif pour transporter des produits en vrac

(30) Priorität: 08.04.1998 DE 29806415 U
(43) Veröffentlichungstag der Anmeldung: 03.11.1999
(73) Patentinhaber: Mann + Hummel ProTec GmbH, 71636 Ludwigsburg (DE)
(72) Erfinder: Goth, Gerhard, 71726 Benningen (DE); Metzger, Michael, 71334 Waiblingen (DE)
(74) Vertreter: Voth, Gerhard, Dipl.-Ing.

(56) Entgegenhaltungen:
- EP-A- 0 526 807
- WO-A-83/03556
- DE-A- 3 941 735
- US-A- 4 372 713

## Beschreibung

Die Erfindung betrifft eine Vorrichtung zum Fördern von Schüttgütern mit einer Saugströmung, nach der Gattung des Hauptanspruchs.

Es ist beispielsweise aus der EP 0 714 016 A2 ein Behälter zum Verwiegen von Schütt- bzw. Dosiergut bekannt, bei dem mittels einer Saugluftförderung beispielsweise schwerrieselnde oder leichte pulver- oder granulatförmige Schüttgüter, z.B. Kunststoffgranulat, gefördert werden. In der Saugluftströmung sind dabei im oberen Teil im Behälter Filterpatronen anzuordnen, die leichte und somit im Saugluftstrom mit aufsteigende Partikel zurückhalten.

Aus der EP-A-0 526 807 und der DE-A-39 41 735 ist jeweils eine gattungsgemäße Vorrichtung zum Fördern von Schüttgütern bekannt.

### Aufgabenstellung

Der Erfindung liegt die Aufgabe zugrunde, eine Vorrichtung der eingangs angegebenen Art so fortzubilden, dass eine einfache und kompakte Anordnung der Filterpatrone im Behälter bei optimaler Filterwirkung möglich ist.

### Vorteile der Erfindung

Mit den im Kennzeichen des Hauptanspruchs angegebenen Merkmalen kann eine erfindungsgemäße Vorrichtung zum Fördern von Schüttgütern in vorteilhafter Weise bei einer an sich bekannten Anbringung von Filterlagen mit einer optimalen Anordnung im Behältergehäuse kombiniert werden. Hierzu befinden sich im oberen Teil des zylindrischen Behälters vor dem Unterdruckanschluss zwei im wesentlichen hohlzylindrische Filterlagen, die sich in den Behälter nach unten derart erstrecken, dass sie im Längsschnitt nach unten konisch zusammengehen. Darüber hinaus ist diese Filterpatrone auf einfache Weise so im Behälter angeordnet, dass sich die Querschnittsfläche zwischen der äußeren Filterlage und der zylindrischen Wand des Behälters und zwischen den gegenüberliegenden Seiten der inneren Filterlage sich nach oben auf optimale Weise derart verringert, dass sich in der Saugströmung aufsteigende Partikel des Förderstroms gleichmäßig verteilt an die rohluftseitige Fläche dieser Filterlagen anlegen.

Beispielsweise können sich Kunststoff-Schwebekörper, die sich in der Förderluft befinden, durch die unterschiedliche Steiggeschwindigkeit, aufgrund der von unten nach oben verkleinerten Querschnittsflächen gleichmäßig verteilen. Durch die konische Ausführung der Filterlagen der Filterpatrone kann die Filterfläche insgesamt vergrößert und dadurch die Filteranströmgeschwindigkeit, beispielsweise um bis zu 40%, reduziert werden. Weiterhin kann auch die Bauhöhe der gesamten Vorrichtung relativ klein gehalten werden.

Bei einer bevorzugten Ausführungsform sind im Innenraum zwischen den Filterlagen mindestens zwei durchgehende Stege angeordnet, die die Filterpatrone in Bereiche aufteilen. Beispielsweise kann die Filterpatrone durch eine Längsteilung mittels der Stege derart in zwei Bereiche aufgeteilt werden, dass die Filterpatrone wechselseitig in jeweils einem Bereich gereinigt werden kann.

In vorteilhafter Weise können hier mit einer Druckluftanordnung Druckluftstöße von oben in den Behälter, bzw. in jeweils einen der abgeteilten Bereiche, entgegen den Förderstrom herbeiführt werden, die in an sich bekannter Weise eine Abreinigung des Filterpatrone bewirken, da hierdurch eventuell an den Filterlagen anhaftende Partikel in den unteren Bereich des Behälters zurück transportiert werden können.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel einer erfindungsgemäßen Vorrichtung zur Förderung von Schüttgütern wird anhand der Zeichnung erläutert. Es zeigen:
Figur 1 eine schematischen Schnitt durch eine Vorrichtung mit einem Behälters für Schüttgut mit einer konischen Filterpatrone und
Figur 2 einen Querschnitt durch eine Filterpatrone mit Stegen.

### Beschreibung des Ausführungsbeispiels

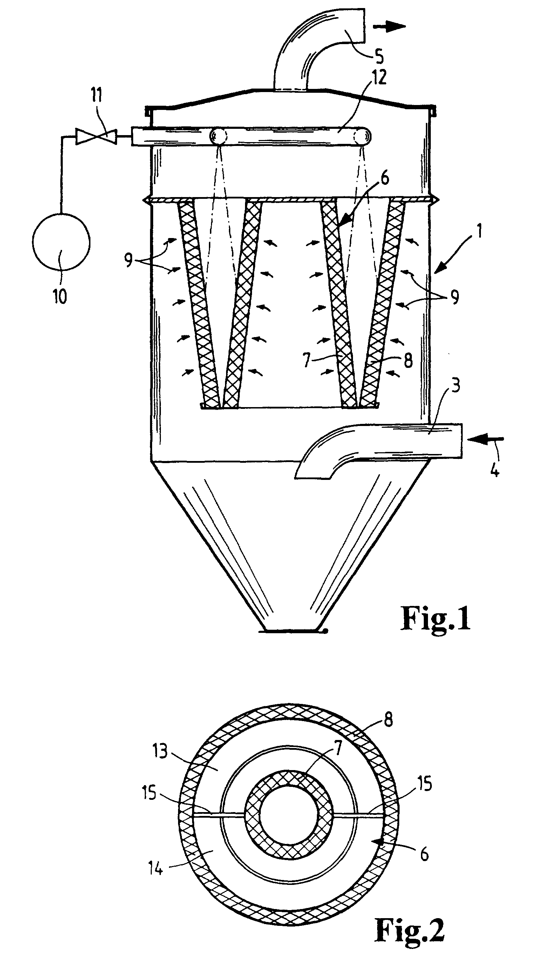

In Figur 1 ist eine schematische Schnittansicht einer Vorrichtung mit einem Behälter 1 gezeigt, in den durch einen Einlass 3 Schüttgut gemäß Pfeil 4 in den Behälter 1 eingefördert wird. Der Fördervorgang wird mittels einer Saugströmung über einen Saugluftanschluss 5 bewirkt. Mit der Saugluft werden leichte Partikel des Schüttgutes oder auch Staub nach oben gesaugt, so dass hier der Einbau einer Filterpatrone 6 notwendig ist.

Die Filterpatrone 6 weist eine innere in etwa hohlzylindrische Filterlage 7 und eine äußere ebenfalls in etwa hohlzylindrische Filterlage 8 auf. Die beiden Filterlagen 7 und 8 laufen nach unten konisch aufeinander zu. Die Partikel, beispielsweise Kunststoff-Schwebekörper, die sich in der Förderluft befinden, werden hierbei aufgrund der von unten nach oben verkleinerten Querschnittsfläche zwischen der Filterlage 8 und der Wand des Behälters 1 und zwischen den gegenüberliegenden Seiten der inneren Filterlage 7 mit unterschiedlicher Steiggeschwindigkeit befördert, wodurch sie sich gleichmäßig verteilt an die Filterlagen 7 und 8 anlegen (Pfeile 9).

Mit einer Druckluftanordnung 10 können über ein Ventil 11 gesteuerte Druckluftstöße über einen Drucklufteinlass 12 von oben in den Behälter 1 an die Filterlagen 7 und 8 von der Reinluftseite her geführt werden. Durch den Druckluftstoß entgegen dem Förderstrom wird in an sich bekannter Weise eine Abreinigung der Filterpatrone 6 bewirkt, wobei an der Rohluftseite der Filterlage 7 und 8 anhaftende Partikel des Schüttgutes oder Staub in den unteren Bereich des Behälters 1 zurück transportiert werden können.

Bei einer Weiterbildung des oben beschriebenen Ausführungsbeispiels sind nach Figur 2 im Innenraum der Filterpatrone 6 zwischen den Filterlagen 7 und 8 zwei durchgehende Stege 15 angeordnet, die die Filterpatrone 6 in zwei Bereiche 13 und 14 aufteilen. Die Filterpatrone 6 kann dadurch mit einer entsprechenden Steuerung der Druckluft wechselseitig in jeweils einem der Bereiche 13 oder 14 gereinigt werden.

## Patentansprüche

1. Vorrichtung zum Fördern von Schüttgütern, mit
- einem zylindrischen Behälter (1), in den die Einleitung durch eine Saugströmung erfolgt, die durch einen Saugdruckanschluss (5) im oberen Teil des Behälters (1) hervorgerufen wird,
wobei sich im oberen Teil des zylindrischen Behälters (1) vor dem Saugdruckanschluss (5) zwei im wesentlichen hohlzylindrische Filterlagen (7,8) befinden, die sich in den Behälter (1) nach unten derart erstrecken, die im Längsschnitt konisch zusammenlaufen **dadurch gekennzeichnet, dass** das Schüttgut im unteren Bereich einleitbar ist und dass
die Querschnittsfläche zwischen der äußeren Filterlage (8) und der zylindrischen Wand des Behälters (1) und zwischen den gegenüberliegenden Seiten der inneren Filterlage (7) sich nach oben derart verringert, dass sich in der Saugströmung aufsteigende Partikel gleichmäßig an diese Filterlagen (7,8) anlegen.

2. Vorrichtung nach Anspruch 1, **dadurch gekennzeichnet, dass**
- im Innenraum zwischen den Filterlagen (7,8) mindestens zwei durchgehende Stege (15) angeordnet sind, die die Filterpatrone (6) in Bereiche (13,14) aufteilen.

3. Vorrichtung nach Anspruch 1 oder 2, **dadurch gekennzeichnet, dass**
- eine Druckluftanordnung (10) vorhanden ist, mit der Druckluftstöße von oben in den Behälter (1) entgegen den Förderstrom herbeiführbar sind.

## Claims

1. Apparatus for conveying loose materials, having
- a cylindrical container (1) into which the introduction is effected through a suction flow which is caused by a suction-pressure
connection (5) in the upper portion of the container (1),
two substantially hollow-cylindrical filter layers (7,8) being situated in the upper portion of the cylindrical container (1) upstream of the suction-pressure connection (5), which layers extend downwardly into the container (1) in such a manner that they converge conically in the longitudinal section,
**characterised in that** the loose material is introducible in the lower region, and **in that** the cross-sectional area reduces upwardly between the outer filter layer (8) and the cylindrical wall of the container (1) and between the oppositely situated sides of the internal filter layer (7) in such a manner that particles, which rise in the suction flow, are deposited uniformly onto these filter layers (7,8).

2. Apparatus according to claim 1, **characterised in that**
- at least two traversing webs (15), which divide the filter cartridge (6) into regions (13,14), are disposed in the interior between the filter layers (7,8).

3. Apparatus according to claim 1 or 2, **characterised in that**
- a compressed-air arrangement (10) is provided, by means of which blasts of compressed air can be conducted from above into the container (1) in opposition to the flow of conveyance.

## Revendications

1. Dispositif pour transporter des produits en vrac comprenant :
un réservoir cylindrique dans lequel l'introduction se fait par un écoulement aspirant généré par un branchement d'aspiration (5) prévu dans la partie supérieure du réservoir (1),
et en amont du branchement d'aspiration (5), dans la partie supérieure du réservoir cylindrique (1), deux couches de filtre (7, 8) essentiellement cylindriques creuses, descendent dans le réservoir (1) et se rejoignent, en coupe longitudinale, suivant une forme conique,
**caractérisé en ce que**
les produits en vrac sont introduits dans la partie inférieure et
la surface de section entre la couche de filtre (8) extérieure et la paroi cylindrique du réservoir (1) ainsi qu'entre les parois en regard de la couche de filtre intérieur (7) vont en diminuant vers le haut et les particules, qui remontent dans l'écoulement d'aspiration, s'appliquent régulièrement contre cette installation de filtre (7, 8).

2. Dispositif selon la revendication 1,
**caractérisé par**
deux entretoises (15), continues, dans le volume intérieur entre les couches de filtre (7, 8) pour subdiviser la cartouche de filtre (6) en deux zones (13, 14).

3. Dispositif selon l'une quelconque des revendications 1 ou 2,
**caractérisé par**
un dispositif à air comprimé qui introduit des impulsions d'air comprimé par le haut dans le réservoir (1), contre la veine de transfert.
